# DEMANDE DE BREVET EUROPEEN

(11) **EP 3 470 968 A1**
(43) Date de publication de la demande: **17.04.2019**
(21) Numéro de dépôt: 18315031.7
(22) Date de dépôt: 02.10.2018
(51) Int. Cl.: G06F 3/0485, G06F 3/0488

(54) **PROCÉDÉ DE LECTURE ANTI FATIGUE SUR ÉCRAN PORTABLE**

(30) Priorité: 11.10.2017 FR 1771071
(71) Demandeur: Tucherer, Laurent, 75116 Paris (FR)
(72) Inventeur: Tucherer, Laurent, 75116 Paris (FR)

(57) **Abrégé**

Procédé de lecture anti fatigue sur écran portable.

Le procédé consiste en l'application d'un masque (3) au texte d'un livre, magazine, ou tout document textuel, laissant apparaître en son ouverture (1) une ou quelques lignes de texte (2), couplée au défilement dudit texte affiché, la vitesse du défilement étant réglable par le lecteur ou ajustée par suivi du mouvement oculaire de celui-ci. La luminosité générale parvenant à la périphérie de la rétine de l'oeil est ainsi réduite sans baisse du contraste du texte.

Le procédé est destiné aux tablettes, smartphones, masques et lunettes de réalité virtuelle.

## Description

La présente invention concerne un procédé de lecture anti fatigue sur écran portable.
L'adoption rapide des tablettes, et smartphones auraient du se traduire par un abandon progressif de la lecture sur papier. Hors il n'en a rien été, cela au profit des industries polluantes du papier, et au détriment des forêts. Cet état de fait provient d'une difficulté à considérer intuitivement que la lecture sur une tablette ou un smartphone placé à une distance rapprochée est nettement plus fatigante que sur un grand écran d'ordinateur placé à distance.

Pour atténuer la fatigue oculaire, on a parfois agi en affaiblissant la composante bleue émise par les leds, soit par conception des leds elles-même du LCD, soit dans le choix de la teinte générale sépia de la page et, marron foncé du texte. Certaines applications jouent aussi sur la luminosité générale de l'appareil adaptée à la lumière ambiante. Selon une autre méthode, le brevet WO2017/072537 revendique une amélioration par un éclairage placé à l'arrière de l'écran. Mais tout cela sans résultat suffisant, car si l'on y réfléchit plus attentivement, regarder un écran de type LCD, ou AMOLED, revient à regarder une lampe, avec son effet néfaste. L'éblouissement de la rétine est plus fort en lecture de près, lorsque les muscles ciliaires de l'oeil exercent un effort d'accommodation sur le cristallin. S'ajoute à cela l'effort des muscles sur le diaphragme de l'iris, la pupille.
La présente invention résout ces inconvénients en réduisant la luminosité parvenant à la périphérie de l'oeil sans baisse du contraste du texte. Elle permet une lecture de plus loin. Elle réduit enfin la quantité d'informations visuelles totales parvenant au cerveau, au profit d'une meilleure attention.

Il s'agit d'un procédé de lecture anti fatigue sur appareil électronique à afficheur incorporant une source lumineuse, en lecture rapprochée tel qu'un smartphone, une tablette, un masque de réalité virtuelle.

Le procédé consiste en l'application d'un masque au texte d'un livre, magazine, ou tout document textuel, laissant apparaître en son ouverture une ou quelques lignes de texte, couplée au défilement dudit texte sur l'afficheur, la vitesse du défilement étant réglable sur l'appareil par le lecteur ou ajustée par suivi du mouvement oculaire de celui-ci par la caméra de l'appareil. Le reste de la zone entourant l'ouverture est de couleur foncée ou noir, de façon à réduire la luminosité à l'essentiel.

Dans une première version l'ouverture est fixe. Elle découvre préférentiellement une ligne de texte, sur fond blanc ou clair, mais sans contrainte sur le nombre de lignes que l'utilisateur peut ajuster à sa guise. Le texte ainsi affiché est remplacé selon une temporisation. Le lecteur paramètre la vitesse de lecture personnelle par un bouton, l'idéal étant que le balayage retour de l'oeil se fasse pendant le renouvellement du texte. L'appareil calcule la temporisation en fonction du nombre de caractères ou de mots de la ligne en cours.

Le bandeau, la fente formée par l'ouverture est normalement uniforme sans surbrillance de texte. L'espace vide au-dessous ou au-dessus permet selon le contexte d'ajouter des éléments de nature diverse : traduction, email, lien url, photo, vidéo, paiement, publicité, messagerie, conversation téléphonique en communauté, en réseau, conversation avec l'auteur.

Cette première version est particulièrement bien adaptée à la lecture sur smartphone, et dans les transports où les vibrations sont permanentes.

Dans une seconde version plus adaptée aux tablettes, l'ouverture est mobile découvrant au fur et mesure de son mouvement de descente le texte de la page. L'oeil suit naturellement son mouvement jusqu'au bas de la page de texte. La page est tournée automatiquement par l'appareil. L'ouverture revient alors en haut à chaque changement de page. Les tests ont déterminé que le meilleur compromis est une ouverture mobile de trois lignes de texte, l'oeil lisant la ligne centrale. L'ouverture effectue un mouvement continu de descente, pixel par pixel, ou approximativement, pour un meilleur confort visuel.
Pour les pays asiatiques, en lecture verticale, l'ouverture, la fente est verticale, le mouvement de la fente de gauche à droite.
Le moyen de réglage de la vitesse de défilement de l'ouverture est opéré automatiquement par le suivi du mouvement oculaire du lecteur qui balaye le texte, le mouvement de l'oeil étant capté par une caméra sur l'appareil électronique.

L'application sur smartphone ou tablette comporte un basculement entre les modes de lecture, permettant de passer du premier mode ligne énoncé au mode page, pour faciliter le feuilletage général du livre ou magazine affiché.

La méthode de suivi du mouvement oculaire est plus facile que celle captant la position exacte de la pupille. Il s'agit ici de synchroniser le changement de texte pendant le retour du balayage de l'oeil vers le début de la ligne de lecture. Le détail de la méthode originale est donné ici.

La caméra de la tablette, ou du smartphone filme le lecteur. Le processus s'effectue en 4 étapes :
- On détecte dans un premier temps dans l'image capté par la caméra les blancs des yeux, en écartant mathématiquement les autres pixels plus foncés.
- On détermine par ailleurs le centre de symétrie du visage de ces zones blanches, dites sclères, par calcul du barycentre, moyenné dans le temps.
- On calcule la somme des coordonnées x de chaque pixel blanc ou clair, de chaque côté du centre de symétrie. Plus l'oeil regarde vers la droite, plus il y a de blanc à gauche, donc de pixels blancs à gauche. Le total obtenu variant selon le mouvement de l'oeil et calculé à chaque instant, est donc minimal à l'extrémité de la ligne, au moment précis où la pupille débute le mouvement de retour à la ligne.
- On renouvelle la ligne de texte quelques ms après cet instant.

En résumé, le suivi oculaire synchronisant le changement de texte au balayage de l'oeil est obtenu par le seuillage des pixels correspondant aux sclères, captées par la caméra, puis leur sommation en valeur absolue suivant leurs coordonnées sur l'axe horizontal des abscisses. D'autres informations sont tirées de l'analyse comme la fréquence de clignement des yeux, la distance du sujet à l'écran, le temps de lecture, la lumière ambiante. Des indicateurs ou conseils d'ergonomie sont alors affichés au lecteur. Les couleurs de fond peuvent varier automatiquement pour soulager la rétine.
La figure 1 représente le mode monoligne à fente fixe sur l'écran d'un smartphone avec caméra, en mode paysage.
La figure 2 représente le mode fente mobile descendante sur l'écran d'une tablette avec caméra, en mode portrait.

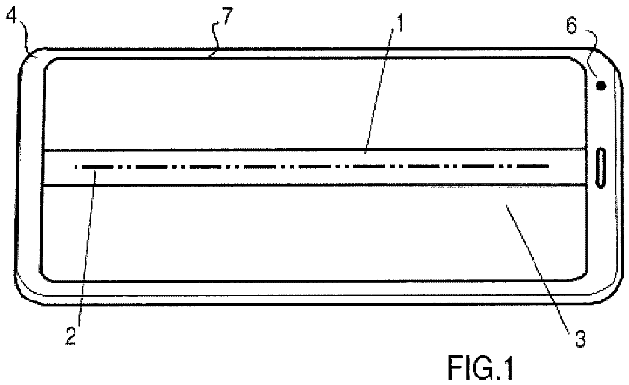

Selon le mode monoligne à ouverture ou fente fixe (1), illustrée en figure 1, l'application du smartphone (4) affiche une ligne de texte (2) en police de couleur noir au milieu de l'afficheur (7), c'est-à-dire l'écran LCD. La fente (1) est en fond blanc pour maximiser le contraste. Le reste de l'écran est une zone (3) de couleur unie foncée, c'est-à-dire correspondant à une couleur RGB en 8bits où R, G et B sont chacun inférieurs à la valeur 128 sur une valeur possible de 0 à 255.

L'écran (7) affiche un menu quand le doigt effleure le haut de l'écran présentant les teintes de fond disponibles.
Le pinch, bien connu du zoom tactile, permet d'élargir avec deux doigts le bandeau, modifiant proportionnellement la taille des caractères. Le bandeau stoppe ou reprend son défilement par une pression du doigt dessus. On le positionne, on le décale en cliquant en-dessous ou au-dessus. Un bouton-glissière tactile surgissant au bas de l'écran (7) permet d'ajuster la vitesse de base de lecture. Cette vitesse induit la vitesse (5) à laquelle la ligne de texte est remplacée par la suivante, après comptage des caractères de la ligne affichée. Sur la figure 1, une double flèche (5) symbolise cette vitesse.

La caméra (6) du smartphone (4) capte le mouvement des yeux du lecteur. L'application extrait, par seuillage de l'image, les blancs des yeux. En effet le blanc de l'oeil est la couleur spécifique la plus claire du visage. Il forme sur le visage deux à quatre zones dont le barycentre moyenné dans le temps donne le centre de symétrie des yeux. Ce type de détection originale est préféré aux méthodes actuelles qui nécessitent comme préalable la détection globale du visage et ne marchent pas quand la tête n'est pas entièrement dans le champ de la caméra.

En sommant la valeur absolue des abscisses x desdits pixels blancs de chaque côté du centre de symétrie, on obtient un total dont la valeur est minimale quand l'oeil regarde à droite en fin de ligne. A ce minima, on exécute le changement de texte, pendant le retour de l'oeil en début de ligne, de façon à ne pas géner la lecture.

On peut affiner le calcul en attribuant avant sommation un poids aux pixels suivant leur luminosité, leur nombre, leur symétrie pour améliorer la robustesse de la détection.

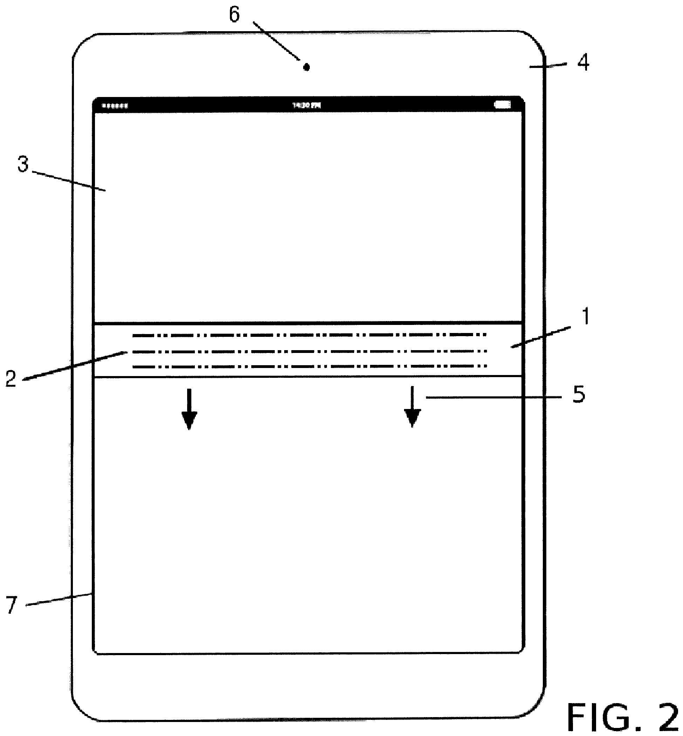

Dans la seconde version selon la figure 2, l'ouverture (1), que l'on peut nommer bandeau (1), est mobile. Son fond est blanc, la police du texte (2) noire. Le bandeau (1) balaye le texte de l'écran (7) de haut en bas à chaque page, mais s'estompe, disparaît sur les illustrations et vidéos. Sur la figure 2, deux flèches vers le bas symbolisent la vitesse de défilement (5). Une zone tactile à droite et à gauche dans la page (3) permet le feuilletage manuel du document sur la tablette (4) dotée d'une caméra (6).

Le procédé s'applique aux tablettes, smartphones, masques et lunettes de réalité virtuelle et éventuellement aux écrans d'ordinateur portable.

## Revendications

1. Procédé de lecture anti fatigue sur appareil électronique (4) à afficheur (7) incorporant une source lumineuse en lecture rapprochée, **caractérisé par le fait qu'**il consiste en l'application d'un masque (3) au texte (2) d'un livre, magazine, ou tout document textuel, laissant apparaître en son ouverture (1) une ou quelques lignes de texte (2), couplée au défilement dudit texte sur l'afficheur (7), la vitesse du défilement (5) étant réglable sur l'appareil (4), le reste de la zone (3) entourant l'ouverture (1) étant de couleur foncée ou noir.

2. Procédé selon la revendication 1 **caractérisé par le fait que** selon un mode, l'ouverture (1) est fixe découvrant une ou plusieurs lignes de texte (2) sur fond blanc ou clair, le texte affiché étant remplacé selon une temporisation.

3. Procédé selon la revendication 1, **caractérisé par le fait que** selon un second mode, l'ouverture (1) est mobile découvrant au fur et mesure de son mouvement de descente (5) le texte (2) de la page.

4. Procédé selon la revendication 1 **caractérisé par le fait que** le moyen de réglage de la vitesse de défilement (5) est opéré automatiquement par le suivi du mouvement oculaire du lecteur qui balaye le texte, le mouvement de l'oeil étant capté par une caméra (6) sur l'appareil électronique (4), en synchronisant le changement de texte pendant le retour du balayage de l'oeil vers le début de la ligne de lecture.

5. Procédé selon la revendication 4 **caractérisé par le fait que** le suivi oculaire synchronisant le changement de texte au balayage de l'oeil est obtenu par le seuillage des pixels correspondant aux sclères captées par la caméra (6), puis leur sommation en valeur absolue suivant leurs coordonnées sur l'axe des abscisses.
